# EUROPÄISCHE PATENTSCHRIFT

(11) **EP 4 193 505 B1**
(45) Veröffentlichungstag und Bekanntmachung des Hinweises auf die Patenterteilung: **21.02.2024**
(21) Anmeldenummer: 21752565.8
(22) Anmeldetag: 02.08.2021
(51) Int. Cl.: H04L 67/12, H04L 67/56

(54) **NETZWERK ZUR DATENÜBERTRAGUNG**
NETWORK FOR DATA TRANSMISSION
RÉSEAU POUR LA TRANSMISSION DE DONNÉES

(30) Priorität: 06.08.2020 LU 101975
(43) Veröffentlichungstag der Anmeldung: 14.06.2023
(73) Patentinhaber: PHOENIX CONTACT GmbH & Co. KG, 32825 Blomberg (DE)
(72) Erfinder: HELLMANN, Klas, 31787 Hameln (DE); MÜLLER, Martin, 32676 Lügde (DE)
(74) Vertreter: LifeTech IP Spies & Behrndt Patentanwälte PartG mbB
(86) Internationale Anmeldenummer: PCT/EP2021/071529
(87) Internationale Veröffentlichungsnummer: WO 2022/029057

(56) Entgegenhaltungen:
- EP-A2- 2 755 097
- US-A1- 2018 309 831

## Beschreibung

Die Erfindung betrifft ein Netzwerk zur Datenübertragung, insbesondere in der Automatisierungstechnik.

Aus dem Stand der Technik ist unter dem Namen OPC Unified Architecture (OPC-UA) ein Standard für den Datenaustausch als plattform-unabhängige Architektur bekannt (OPC: Open Platform Communications), der auch im Umfeld der Automatisierungstechnik Verwendung findet, um einen Datenaustausch zwischen allen Endgeräten (Sensoren und Aktoren) in der Automatisierungstechnik zu ermöglichen. Damit wird OPC-UA nicht mehr ausschließlich für die Übertragung von Daten in überlagerte Systeme (z.B. via Edge Gateway zur Cloud) verwendet, sondern auch für den Austausch von Daten zwischen Steuerungen und Endgeräten (Sensoren und Aktoren), die bisher vielfach über entsprechende Ethernet-basierte Protokolle (z.B. Profinet, Modbus TCP, EtherCAT, etc.) miteinander kommunizieren.

Bei der Verwendung von OPC-UA in der Automatisierungstechnik treten jedoch zwei maßgebliche Herausforderungen auf. Zum einen verfügen heutige Endgeräten (Sensoren und Aktoren) über keine geeignete Schnittstelle. Zum anderen haben die bekannten Endgeräte (Sensoren und Aktoren) noch nicht durchgängig ausreichend Rechenleistung, um einen entsprechenden OPC-UA-Server zu betreiben. Die bekannten Endgeräte können also nicht unmittelbar über OPC-UA angesprochen werden.

Zur Lösung dieses Problems können geeignete Gateways eingesetzt werden, die einen externen Zugriff auf herkömmliche Endgeräte (Sensoren und Aktoren) über OPC-UA ermöglichen. Hierzu enthalten die Gateways einen OPC-UA-Server, der dann mit den einzelnen Endgeräten (Sensoren und Aktoren) kommuniziert. Die Kommunikation zwischen dem Gateway und den einzelnen Endgeräten kann dann gemäß einem herkömmlichen anderen Standard (z.B. Profinet, Modbus TCP, EtherCAT, etc.) erfolgen, der von den Endgeräten unterstützt wird.

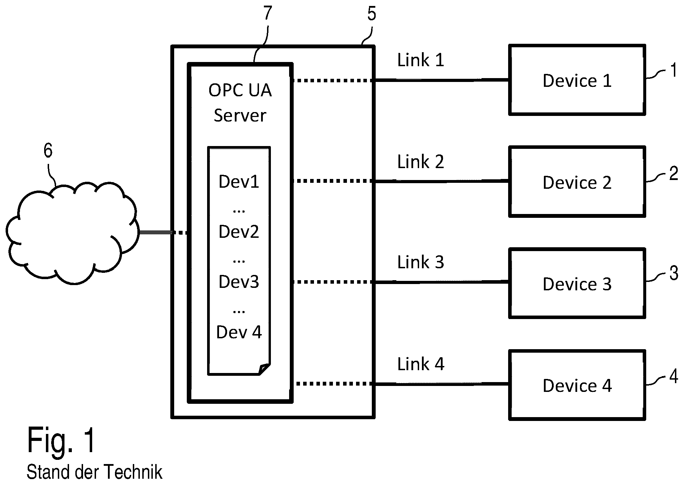

So zeigt Figur 1 ein derartiges herkömmliches Netzwerk mit mehreren Endgeräten 1-4, wobei es sich um Sensoren oder Aktoren der Automatisierungstechnik handeln kann. Weiter zeigt die Zeichnung ein Gateway 5, das mit den einzelnen Endgeräten 1-4 über jeweils eine Datenverbindung Link1-Link4 kommuniziert, wobei die Datenverbindungen Link1-Link4 nicht gemäß OPC-UA arbeiten, sondern gemäß einem anderen herkömmlichen Standard (z.B. Profinet, Modbus TCP, EtherCAT, etc.). Das Gateway 5 ist an ein externes Datenübertragungsnetz 6 angebunden, wobei aus dem Datenübertragungsnetz 6 heraus auch die einzelnen Endgeräte 1-4 über OPC-UA angesprochen werden können. Hierzu ist in das Gateway 5 ein OPC-UA-Server 7 integriert.

Nachteilig an dieser technischen Lösung ist jedoch die Tatsache, dass kein vollkommen transparenter Durchgriff auf die einzelnen Endgeräte ermöglicht wird, da die Daten der einzelnen Endgeräte unter der IP-Adresse (IP: Internet Protocol) des Gateways 5 erreicht werden.

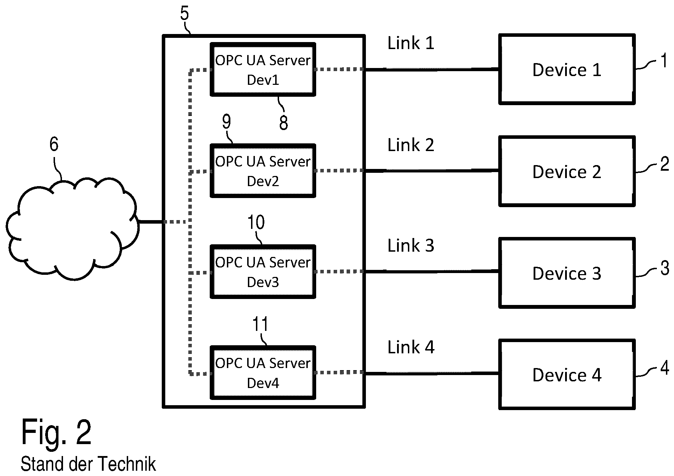

Zur Lösung dieses technischen Problems ist ein geringfügig verändertes Netzwerk bekannt (vgl. US 2018/0309831 A1), wie es in Figur 2 dargestellt ist. Dieses ebenfalls bekannte Netzwerk stimmt weitgehend mit dem vorstehend beschriebenen und in Figur 1 dargestellten Netzwerk überein, so dass zur Vermeidung von Wiederholungen auf die vorstehende Beschreibung verwiesen wird, wobei für entsprechende Einzelheiten dieselben Bezugszeichen verwendet werden. Eine Besonderheit dieses bekannten Netzwerks besteht darin, dass in dem Gateway 5 für jedes der Endgeräte 1-4 jeweils ein OPC-UA-Server 8-11 vorgesehen ist. Dies ermöglicht vorteilhaft einen vollständig transparenten Durchgriff aus dem externen Netzwerk 6 auf die einzelnen Endgeräte 1-4, da jedem der Endgeräte 1-4 jeweils einer der OPC-UA-Server 8-11 zugeordnet ist.

Nachteilig an dieser bekannten technischen Lösung gemäß Figur 2 ist die aufwändige Implementierung der einzelnen OPC-UA-Server 8-11 in dem Gateway 5.

Der Erfindung liegt deshalb die Aufgabe zugrunde, ein entsprechend verbessertes Netzwerk zur Datenübertragung zu schaffen.

Diese Aufgabe wird durch ein erfindungsgemäßes Netzwerk gemäß dem Hauptanspruch gelöst.

Das erfindungsgemäße Netzwerk dient zur Datenübertragung, wobei sich das Netzwerk insbesondere für einen Einsatz in der Automatisierungstechnik eignet. Die Erfindung ist jedoch hinsichtlich des Anwendungsgebiets des Netzwerks nicht auf die Automatisierungstechnik beschränkt.

In Übereinstimmung mit dem vorstehend beschriebenen Stand der Technik umfasst das erfindungsgemäße Netzwerk ebenfalls mehrere Endgeräte, wobei es sich beispielsweise um Sensoren oder Aktoren handeln kann. Die Erfindung ist jedoch hinsichtlich des Typs der einzelnen Endgeräte nicht auf Sensoren und Aktoren beschränkt, wie sie beispielsweise in der Automatisierungstechnik Anwendung finden können.

Weiterhin umfasst das erfindungsgemäße Netzwerk in Übereinstimmung mit dem vorstehend beschriebenen Stand der Technik ein gemeinsames Gateway, das eine externe Anbindung des Netzwerks mit den Endgeräten an ein externes Datenübertragungsnetz ermöglicht. Das Gateway ermöglicht also einen externen Zugriff auf die einzelnen Endgeräte von dem externen Datenübertragungsnetz aus, wie vorstehend bereits zum Stand der Technik beschrieben wurde.

Darüber hinaus weist auch das erfindungsgemäße Netzwerk in Übereinstimmung mit dem Stand der Technik Datenverbindungen zwischen dem Gateway und den einzelnen Endgeräten auf, um eine Kommunikation zwischen dem Gateway und den Endgeräten zu ermöglichen.

Weiterhin verfügt auch das erfindungsgemäße Netzwerk über mehrere OPC-UA-Server, wobei den einzelnen Endgeräten jeweils einer der OPC-UA Server zugeordnet ist. Die einzelnen Endgeräte kommunizieren also mit den einzelnen OPC-UA-Servern, so dass die einzelnen Endgeräte von dem externen Datenübertragungsnetz gemäß OPC-UA ansprechbar sind und zwar mit einem vollkommen transparenten Durchgriff auf die einzelnen Endgeräte.

Hierbei ist zu erwähnen, dass die Erfindung nicht nur Schutz beansprucht für ein Netzwerk, bei dem allen Endgeräten an dem Gateway jeweils ein OPC-UA-Server zugeordnet ist. Vielmehr besteht auch die Möglichkeit, dass an das Gateway auch weitere Endgeräte angeschlossen sind, die nicht über OPC-UA angesprochen werden und denen deshalb in dem Gateway auch kein eigener OPC-UA-Server zugeordnet ist. Weiterhin besteht im Rahmen der Erfindung auch die Möglichkeit, dass an das Gateway Endgeräte angeschlossen sind, die selbst OPC-UA-fähig sind und einen eigenen OPC-UA-Server enthalten. Für diese OPC-UA-fähigen Endgeräte muss deshalb in dem Gateway auch kein OPC-UA-Server vorgesehen sein.

Das erfindungsgemäße Netzwerk zeichnet sich nun gegenüber dem Stand der Technik dadurch aus, dass in den einzelnen Endgeräten jeweils eine Softwarekomponente gespeichert ist, die geeignet ist, um einen der OPC-UA-Server zu bilden. Im Betrieb lädt das Gateway dann die Softwarekomponenten für die Bildung der einzelnen OPC-UA-Server von den Endgeräten und führt die Softwarekomponenten in dem Gateway aus, um jeweils einen OPC-UA-Server zu bilden. Durch diese erfindungsgemäße technische Lösung wird die Implementierung der OPC-UA-Server in dem Gateway wesentlich vereinfacht.

Bei dem bevorzugten Ausführungsbeispiel der Erfindung ist jedem der Endgeräte (Aktor oder Sensor) jeweils ein Laufzeitelement bzw. eine Instanz der Softwarekomponente zugeordnet, wobei die Softwarekomponente auch als App bezeichnet werden kann.

Das Gateway enthält also eine geeignete Hardware, die zum einen das Laden der Softwarekomponente von dem jeweiligen Endgerät und zum anderen das Ausführen der geladenen Softwarekomponente in dem Gateway ermöglicht, um einen OPC-UA-Software zu bilden.

Die einzelnen Endgeräte enthalten dagegen eine geeignete Hardware, um zum einen das Speichern der Softwarekomponente in dem jeweiligen Endgerät und zum anderen das Übertragen der Softwarekomponente an das Gateway zu ermöglichen.

In einem bevorzugten Ausführungsbeispiel der Erfindung weist das Gateway zur Kommunikation mit den einzelnen Endgeräten jeweils einen Port für die einzelnen Endgeräte auf. Das Gateway lädt die Softwarekomponente für die Bildung der einzelnen OPC-UA-Server dann portbezogen individuell für jeden der Ports, so dass jedem der Ports des Gateways jeweils eine der Softwarekomponenten zugeordnet ist, die einen OPC-UA-Server bilden.

Weiterhin ist zu erwähnen, dass die einzelnen Endgeräte bei dem bevorzugten Ausführungsbeispiel jeweils TCP-IP-fähig sind (TCP-IP: Transmission Control Protocol/Internet Protocol). Die Erfindung ist jedoch hinsichtlich des Übertragungsstandards, der von den einzelnen Endgeräten unterstützt wird, nicht auf TCP-IP-fähige Endgeräte beschränkt. Vielmehr können die einzelnen Endgeräte im Rahmen der Erfindung grundsätzlich auch andere Übertragungsstandards unterstützen.

Beispielsweise können die einzelnen Endgeräte zur Kommunikation mit den zugeordneten OPC-UA-Servern jeweils eine der folgenden Datenschnittstellen aufweisen:
- Ethernet,
- I/O-Link gemäß EN 61131,
- Highway Addressable Remote Transducer (HART).

Vorteilhaft an der erfindungsgemäßen Lösung ist insbesondere, dass die einzelnen OPC-UA-Server jeweils eine eigene IP-Adresse haben können, um einen direkten und völlig transparenten Durchgriff von dem externen Datenübertragungsnetz auf die einzelnen Endgeräte und eine individuelle Adressierung der einzelnen Endgeräte zu ermöglichen. Die einzelnen Endgeräte stellen sich also aus der Perspektive des externen Übertragungsnetzes als OPC-UA-Endgeräte dar.

In einer Erfindungsvariante sind die einzelnen Endgeräte jeweils als ein Modul in einer I/O-Station ausgebildet. Bei dieser Erfindungsvariante sind die einzelnen Endgeräte also nicht baulich getrennt, sondern in der I/O-Station integriert.

Weiterhin ist zu erwähnen, dass die Datenverbindung zwischen dem Gateway und den einzelnen Endgeräten jeweils einen lokalen Bus aufweisen kann. Dies ist insbesondere dann vorteilhaft, wenn es sich bei den einzelnen Endgeräten um Module einer I/O-Station handelt, wie vorstehend beschrieben wurde.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine schematische Darstellung eines herkömmlichen Netzwerks zur Datenkommunikation gemäß OPC-UA mit einem Gateway mit einem integrierten OPC-UA-Server.
Figur 2 zeigt eine Abwandlung des herkömmlichen Netzwerks gemäß Figur 1, wobei in dem Gateway für jedes der Endgeräte jeweils ein OPC-UA-Server vorgesehen ist.
Figur 3 zeigt ein erfindungsgemäßes Netzwerk, bei dem die Softwarekomponenten für die Bildung der OPC-UA-Server in dem Gateway von den einzelnen Endgeräten geladen werden.
Figur 4 zeigt eine Abwandlung von Figur 3, wobei die einzelnen Endgeräte jeweils Module in einer I/O-Station sind.

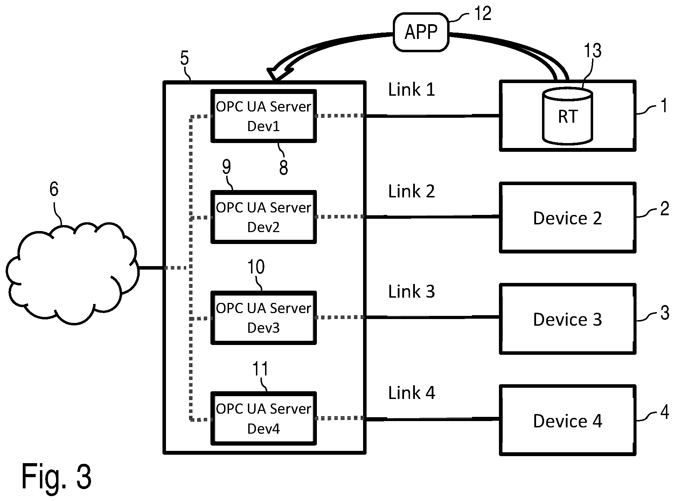

Figur 3 zeigt eine schematische Darstellung eines erfindungsgemäßen Netzwerks, das weitgehend mit dem vorstehend beschriebenen und in Figur 2 dargestellten herkömmlichen Netzwerk übereinstimmt, so dass zur Vermeidung von Wiederholungen auf die vorstehende Beschreibung zu Figur 2 verwiesen wird, wobei für entsprechende Einzelheiten dieselben Bezugszeichen verwendet werden.

Eine Besonderheit dieses erfindungsgemäßen Ausführungsbeispiels besteht darin, dass in den einzelnen Endgeräten 1-4 jeweils eine Softwarekomponente 12 in einem Programmspeicher 13 gespeichert ist, die dann von dem Gateway 5 geladen wird, um den zugehörigen OPC-UA-Server 8 zu bilden.

In der Zeichnung ist zur Vereinfachung nur die Softwarekomponente 12 zur Bildung des OPC-UA-Servers 8 dargestellt. Die anderen OPC-UA-Server 9-11 werden jedoch in gleicher Weise gebildet, indem eine entsprechende Softwarekomponente von den Endgeräten 2-4 geladen wird.

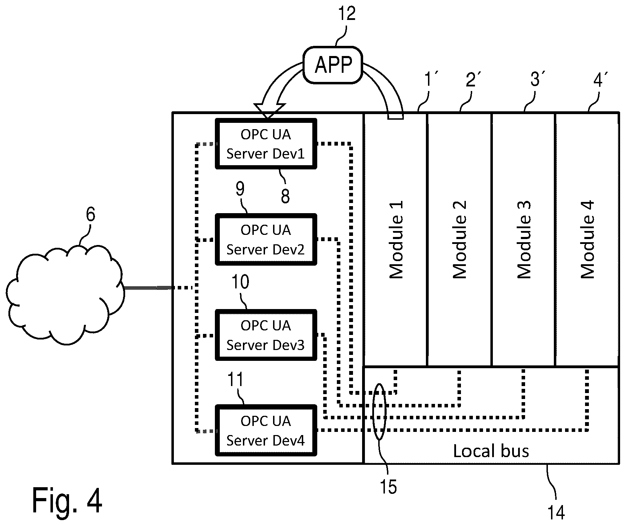

Figur 4 zeigt eine Abwandlung eines erfindungsgemäßen Netzwerks, das teilweise mit dem vorstehend beschriebenen und in Figur 3 dargestellten erfindungsgemäßen Netzwerk übereinstimmt, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Endgeräte 1'-4' als Module in einer I/O-Station 14 ausgebildet sind. Die Endgeräte 1'-4' sind hierbei also baulich nicht getrennt, sondern in die I/O-Station 14 integriert.

Weiterhin ist zu erwähnen, dass die Kommunikation zwischen den OPC-UA-Servern 8-11 einerseits und den Endgeräten 1'-4' andererseits hierbei über einen lokalen Bus 15 erfolgt, der in herkömmlicher Weise ausgebildet sein kann.

Auch bei diesem Ausführungsbeispiel werden die OPC-UA-Server 8-11 gebildet, indem die zugehörige Softwarekomponente 12 aus dem zugehörigen Endgerät 1' geladen wird.

Die Erfindung ist nicht auf die vorstehend beschriebenen bevorzugten Ausführungsbeispiele beschränkt. Vielmehr ist eine Vielzahl von Varianten und Abwandlungen möglich. Der Schutzbereich der Erfindung wird durch die Ansprüche definiert.

### Bezugszeichenliste

- 1-4: Endgeräte
- 1'-4': Endgeräte
- 5: Gateway
- 6: Externes Datenübertragungsnetz
- 7: OPC-UA-Server
- 8-11: OPC-UA-Server
- 12: Softwarekomponente zur Bildung der OPC-UA-Server
- 13: Programmspeicher für Softwarekomponente
- 14: I/O-Station
- 15: Lokaler Bus
- Link1-Link4: Datenverbindung zwischen Gateway und Endgeräten

## Patentansprüche

1. Netzwerk zur Datenübertragung, insbesondere in der Automatisierungstechnik, mit
a) mehreren Endgeräten (1-4; 1'-4'),
b) einem gemeinsamen Gateway (5) zur externen Anbindung des Netzwerks mit den Endgeräten (1-4; 1'-4') an ein externes Datenübertragungsnetz (6),
c) Datenverbindungen (Link1-Link4) zwischen dem Gateway (5) und den einzelnen Endgeräten (1-4; 1'-4'), und
d) mehreren OPC-UA-Servern (8-11), wobei den einzelnen Endgeräten (1-4; 1'-4') jeweils einer der OPC-UA-Server (8-11) zugeordnet ist und die einzelnen OPC-UA-Server (8-11) eingerichtet sind, mit den zugehörigen Endgeräten (1-4; 1'-4') zu kommunizieren, so dass die einzelnen Endgeräte (1-4, 1'-4') von dem externen Datenübertragungsnetz (6) gemäß OPC-UA ansprechbar sind, wobei
e) in den einzelnen Endgeräten (1-4; 1'-4') jeweils eine Softwarekomponente (12) gespeichert ist, die geeignet ist, um einen der OPC-UA-Server (8-11) zu bilden, und
f) das Gateway (5) eingerichtet ist, die Softwarekomponenten (12) für die Bildung der einzelnen OPC-UA-Server (8-11) von den Endgeräten (1-4; 1'-4') zu laden und in dem Gateway (5) auszuführen.

2. Netzwerk nach Anspruch 1, wobei
a) das Gateway (5) zur Kommunikation mit den einzelnen Endgeräten (1-4; 1'-4') jeweils einen Port für die einzelnen Endgeräte (1-4, 1'-4') aufweist, und
b) das Gateway (5) zudem eingerichtet ist, die Softwarekomponente (12) für die Bildung der OPC-UA-Server (8-11) portbezogen individuell für jeden der Ports zu laden und auszuführen, so dass jedem der Ports jeweils eine der Softwarekomponenten (12) zugeordnet ist.

3. Netzwerk nach einem der vorhergehenden Ansprüche, wobei die einzelnen Endgeräte (1-4, 1'-4') jeweils TCP/IP-fähig sind.

4. Netzwerk nach einem der vorhergehenden Ansprüche, wobei die einzelnen OPC-UA-Server (8-11) jeweils eine eigene IP-Adresse haben, um einen Durchgriff von dem externen Datenübertragungsnetz (6) auf die einzelnen Endgeräte (1-4, 1'-4') und eine individuelle Adressierung der einzelnen Endgeräte (1-4, 1'-4') zu ermöglichen.

5. Netzwerk nach einem der vorhergehenden Ansprüche, wobei die einzelnen Endgeräte (1-4, 1'-4') zur Kommunikation mit den zugeordneten OPC-UA-Servern (8-11) jeweils eine der folgenden Datenschnittstellen aufweisen:
a) Ethernet,
b) IO-Link gemäß EN 61131,
c) Highway Addressable Remote Transducer (HART).

6. Netzwerk nach einem der vorhergehenden Ansprüche, wobei die Endgeräte (1-4, 1'-4') jeweils mindestens einen Sensor und/oder mindestens einen Aktor enthalten.

7. Netzwerk nach einem der Ansprüche 1 bis 6, wobei die Endgeräte (1'-4') jeweils ein Modul in einer I/O-Station (14) sind.

8. Netzwerk nach einem der vorhergehenden Ansprüche, wobei die Datenverbindung zwischen dem Gateway (5) und den einzelnen Endgeräten (1'-4') einen lokalen Bus (15) aufweist.

## Claims

1. A network for data transmission, in particular in automation technology, comprising:
a) multiple terminal devices (1-4; 1'-4'),
b) a common gateway (5) for the external connection of the network with the terminal devices (1-4; 1'-4') to an external data transmission network (6),
c) data links (Link1-Link4) between the gateway (5) and the individual terminal devices (1-4; 1'-4'), and
d) multiple OPC-UA servers (8-11), wherein each of the terminal devices (1-4; 1'-4') is associated with one of the OPC-UA servers (8-11) and the individual OPC-UA servers (8-11) are configured to communicate with the corresponding terminal devices (1-4; 1'-4') so that the individual terminal devices (1-4, 1'-4') are addressable by the external data transmission network (6) according to OPC-UA, wherein
e) in the individual terminal devices (1-4; 1'-4') a software component (12) is stored, which is configured to create one of the OPC-UA servers (8-11), and
f) the gateway (5) is configured to load the software component (12) for creating the individual OPC-UA servers (8-11) from the terminal devices (1-4; 1'-4') and to execute it in the gateway (5).

2. The network according to claim 1, wherein
a) the gateway (5) comprises a port for each of the individual terminal devices (1-4; 1'-4') for communication with them, and
b) the gateway (5) is further configured to load and to execute the software component (12) for creating the individual OPC-UA servers (8-11) individually for each of the ports, so that each of the ports is associated with one of the software components (12).

3. The network according to any one of the preceding claims, wherein the individual terminal devices (1-4; 1'-4') are in each case TCP/IP-capable.

4. The network according to any one of the preceding claims, wherein the individual OPC-UA servers (8-11) in each case have their own IP address to enable access from the external data transmission network (6) to the individual terminal devices (1-4; 1'-4') and individual addressing of the terminal devices (1-4; 1'-4').

5. The network according to any one of the preceding claims, wherein the individual terminal devices (1-4; 1'-4') comprise one of the following data interfaces for communication with the associated OPC-UA servers (8-11):
a) Ethernet,
b) I/O link according to EN 61131,
c) Highway Addressable Remote Transducer (HART).

6. The network according to any one of the preceding claims, wherein the terminal devices (1-4; 1'-4') each comprise at least one sensor and/or at least one actuator.

7. The network according to any one of claims 1 to 6, wherein the terminal devices (1'-4') are in each case a module in an I/O station (14).

8. The network according to any one of the preceding claims, wherein the data link between the gateway (5) and the individual terminal devices (1'-4') comprises a local bus (15).

## Revendications

1. Réseau pour la transmission de données, en particulier dans la technique d'automatisation, comprenant
a) plusieurs dispositifs terminaux (1-4 ; 1'-4'),
b) une passerelle commune (5) pour la connexion externe du réseau avec les dispositifs terminaux (1-4; 1'-4') à un réseau externe (6) de transmission de données,
c) des liaisons de données (Link1-Link4) entre la passerelle (5) et les différents dispositifs terminaux (1-4; 1'-4'), et
d) plusieurs serveurs OPC-UA (8-11), chacun des dispositifs terminaux (1-4 ; 1'-4') étant associé à l'un des serveurs OPC-UA (8-11) et les différents serveurs OPC-UA (8-11) étant configurés pour communiquer avec les dispositifs terminaux correspondants (1-4 ; 1'-4'), de sorte que les différents dispositifs terminaux (1-4, 1'-4') soient adressables par le réseau externe de transmission de données (6) conformément à OPC-UA, où
e) dans les différents dispositifs terminaux (1-4 ; 1'-4') est stockée respectivement une composante logicielle (12) adaptée pour former l'un des serveurs OPC-UA (8-11), et
f) la passerelle (5) est configurée pour charger la composante logicielle (12) pour la formation des différents serveurs OPC-UA (8-11) à partir des dispositifs terminaux (1-4 ; 1'-4') et pour exécuter cette composante dans la passerelle (5).

2. Réseau selon la revendication 1, dans lequel
a) la passerelle (5) pour la communication avec les différents dispositifs terminaux (1-4 ; 1'-4') comprend respectivement un port pour les différents dispositifs terminaux (1-4 ; 1'-4'), et
b) la passerelle (5) est configurée pour charger et exécuter la composante logicielle (12) pour la formation des serveurs OPC-UA (8-11) de manière individuelle pour chaque port, de sorte que chaque port soit associé respectivement à l'une des composantes logicielles (12).

3. Réseau selon l'une des revendications précédentes, où les différents dispositifs terminaux (1-4 ; 1'-4') sont chacun compatibles TCP/IP.

4. Réseau selon l'une des revendications précédentes, où les différents serveurs OPC-UA (8-11) ont chacun une adresse IP propre, afin de permettre un accès depuis le réseau externe de transmission de données (6) aux différents dispositifs terminaux (1-4 ; 1'-4') et un adressage individuel des différents dispositifs terminaux (1-4 ; 1'-4').

5. Réseau selon l'une des revendications précédentes, dans lequel les différents dispositifs terminaux (1-4 ; 1'-4') pour la communication avec les serveurs OPC-UA associés (8-11) comprennent chacun l'une des interfaces de données suivantes:
a) Ethernet,
b) IO-Link conformément à EN 61131,
c) Highway Addressable Remote Transducer (HART).

6. Réseau selon l'une quelconque des revendications précédentes, dans lequel les dispositifs terminaux (1-4 ; 1'-4') comprennent chacun au moins un capteur et/ou au moins un actionneur.

7. Réseau selon l'une quelconque des revendications 1 à 6, dans lequel les dispositifs terminaux (1'-4') sont chacun un module dans une station d'entrée/sortie (14).

8. Réseau selon l'une des revendications précédentes, dans lequel la liaison de données entre la passerelle (5) et les différents dispositifs terminaux (1'-4') comprend un bus local (15).
